# EUROPÄISCHE PATENTSCHRIFT

(11) **EP 2 798 250 B1**
(45) Veröffentlichungstag und Bekanntmachung des Hinweises auf die Patenterteilung: **28.06.2017**
(21) Anmeldenummer: 12823147.9
(22) Anmeldetag: 21.12.2012
(51) Int. Cl.: F16K 17/02, A62C 4/00, B65D 90/34

(54) **BERSTELEMENT FÜR EINE EXPLOSIONSGEFÄHRDETE ANLAGE**
BURSTING ELEMENT FOR AN EXPLOSION-PRONE INSTALLATION
ÉLÉMENT DE RUPTURE DESTINÉ À UN SYSTÈME EXPOSÉ À UN RISQUE D'EXPLOSION

(30) Priorität: 23.12.2011 DE 102011122300
(43) Veröffentlichungstag der Anmeldung: 05.11.2014
(73) Patentinhaber: Reitinger, Peter, 64807 Dieburg (DE)
(72) Erfinder: Reitinger, Peter, 64807 Dieburg (DE)
(74) Vertreter: Behrens, Helmut
(86) Internationale Anmeldenummer: PCT/EP2012/005305
(87) Internationale Veröffentlichungsnummer: WO 2013/091876

(56) Entgegenhaltungen:
- EP-B1- 1 369 628
- KR-A- 20090 100 065
- US-A- 5 249 534
- US-A- 5 335 936
- US-A- 5 460 402
- US-A1- 2006 260 825

## Beschreibung

Die Erfindung betrifft ein Berstelement für eine explosionsgefährdete Anlage gemäß dem Oberbegriff des Patentanspruchs 1.

In vielen explosionsgefährdeten Anlagen wie zum Beispiel Silos, Behältern, Rohren und dergleichen werden häufig sogenannte Berstscheiben als Berstelemente eingebaut, die als Sollreiss- oder Sollbruchstelle wirken. Solche Berstscheiben bestehen meist aus eingerahmten Blechscheiben, die in Öffnungen von explosionsgefährdeten Anlagen eingebaut sind und die bei einem bestimmten Überdruck bersten und den Überdruck zur Atmosphäre oder nach außerhalb der explosionsgefährdeten Anlagen freigeben, damit das Silo, der Behälter, die Rohre oder die mit diesen verbundenen Anlagenteile nicht beschädigt werden. Derartige Berstscheiben werden dann nach einer Explosion wieder ersetzt, so dass die damit geschützten Anlagen wieder betriebsbereit sind.

Eine derartige Berstscheibe zur Druckentlastung ist aus der EP 1 369 628 B1 bekannt, die innerhalb eines gasdurchlässigen Korbes eingebaut ist, der dem Feuerschutz dient. Dabei ist unterhalb des Korbes ein runder Sockel vorgesehen, den zwei übereinander angeordnete rahmenförmige Rohrstutzen bilden, die die Öffnung einer explosionsgefährdeten Anlage umgreifen. Der untere Sockelteil ist dabei mit der explosionsgefährdeten Anlage und der obere Sockelteil mit dem Korb verbunden. Beide Rohrstutzen sind durch rechtwinklig seitlich abknickende Flansche durch Schrauben miteinander verbunden. Zwischen den Flanschen ist eine sogenannte Berstscheibe eingeklemmt. Diese besteht aus einem ringförmigen flachen Rand und einer innerhalb der Rohrstutzen flachen domförmigen Wölbung, die nach außen zum Inneren des Korbes gerichtet ist und offensichtlich aus einem dünnen Blech besteht. Im Fesselungsbereich der Flansche enthält der ringförmige Rand eine Sollreißstelle, die als kreisbogenförmiger Spalt mit beabstandeten Materialbrücken ausgebildet ist und von den Flanschen klemmend abgedeckt wird. Bei einem vorgegebenen explosionsbedingten Überdruck im Inneren der explosionsgefährdeten Anlage reißt der innere Teil der Berstscheibe vom Rand im Bereich der Spalte ab und gibt die Öffnung klappdeckelartig zum Korb oder zur Atmosphäre frei. Dadurch wird allerdings die Berstscheibe zerstört und muss danach ersetzt werden. Dazu muss der gesamte Korb von der explosionsgefährdeten Anlage abgeschraubt werden, was eine längere Betriebsunterbrechung der explosionsgefährdeten Anlage bedeutet.

US5460402 offenbart ein Berstelement gemäß dem Oberbegriff der Ansprüche 1 und 2. Der Erfindung liegt deshalb die Aufgabe zugrunde, ein eingangs genanntes Berstelement so zu verbessern, dass damit eine sichere Druckentlastung erfolgt und die Öffnung wieder schnell verschlossen werden kann.

Diese Aufgabe wird durch die in den Patentansprüchen 1 und 2 angegebene Erfindung gelöst. Weiterbildungen und vorteilhafte Ausführungsbeispiele der Erfindung sind in den Unteransprüchen angegeben.

Die Erfindung hat den Vorteil, dass das Berstelement durch die Klettbandbefestigung nicht zerstört wird, so dass durch einfaches Andrücken einer Berstfolie oder eines Berstbleches als Abdichtelement die Öffnung schnell wieder verschlossen werden kann. Dabei hat eine Befestigung mit einem Klettverschluss als Sollreißstelle den Vorteil, dass dieser verhältnismäßig hohen statischen Drücken standhält.

Eine besondere Ausführungsart des Abdichtelements als Berstfolie hat den Vorteil, dass diese wenig Beschleunigungsmasse aufweist und leicht plastisch verformbar ist, so dass sie schnell öffnet und umliegende Teile und Personen auch bei hohen Explosionsdrücken deshalb kaum beschädigen oder verletzen kann.

Bei einer besonderen Ausbildung der Erfindung, wobei das Berstblech oder die Berstfolie als Abdichtelemente aus mehreren möglichst im Zentrum zusammenlaufenden Teilabdichtelementen verfügt, hat den Vorteil, dass hierdurch auch großflächige Druckentlastungen sehr schnell realisierbar sind. Dies hat gleichzeitig den Vorteil, dass die Teilabdichtelemente ohne großen Aufwand nach dem Öffnen wieder verschlossen werden können.

Bei einer weiteren besonderen Ausführungsart der Erfindung, bei der das Berstelement als Schublade innerhalb eines Brandschutzkorbes ausgebildet ist, hat den Vorteil, dass die Öffnung nach einer Explosion schnell wieder verschließbar ist. Denn dazu kann das Berstelement durch leichtes Andrücken der Berstfolie oder des Berstbleches bei herausgezogenem Rahmenteil schnell wieder verschlossen werden, ohne das dazu der Brandschutzkorb demontiert werden müsste.

Die Erfindung wird anhand eines Ausführungsbeispiels, das in der Zeichnung dargestellt ist, näher erläutert.

Es zeigen:
- Fig. 1:: eine Schnittdarstellung eines nicht erfindungsgemäßen Berstelements mit einem klappenförmigen einteiligen Berstblech;
- Fig. 2:: ein Berstelement mit einer mehrteiligen Berstfolie, und
- Fig. 3:: ein Berstelement mit schubladenförmigem Befestigungsrahmen.

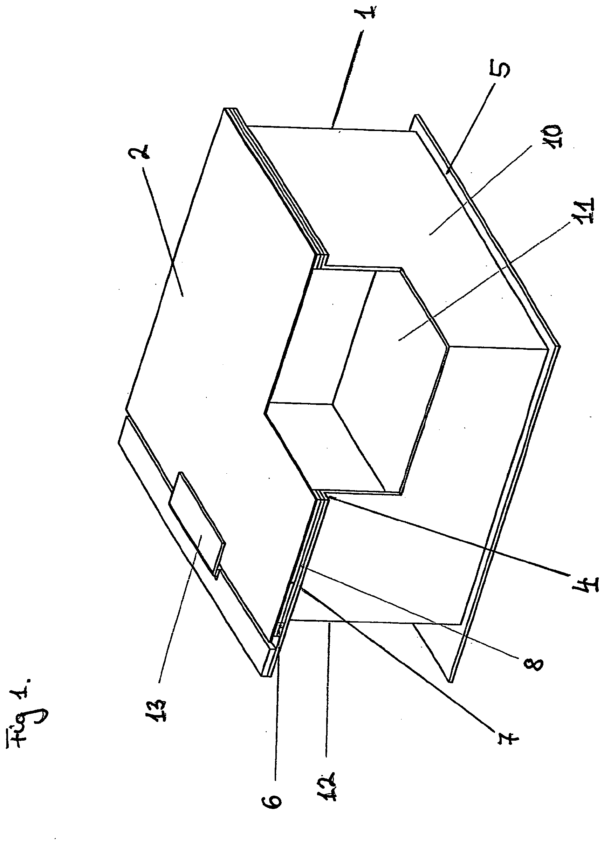

In Fig. 1 der Zeichnung ist ein Berstelement mit Ausschnitt dargestellt, das aus einem kastenförmigen Rahmen 1 und einem klappenförmigen einteiligen Berstblech 2 als Abdichtelement besteht, wobei zwischen dem oberen Rahmenrand 4 als Auflagerand und dem äußeren Rand des Berstblechs 2 zur Befestigung ein Klettbandverschluss 6 als Sollreißstelle vorgesehen ist.

Der kastenförmige Rahmen 1 besteht dabei aus vier vertikalen Seitenflächen 10, die an den Ecken rechtwinklig miteinander verbunden sind. Der Rahmen 1 besitzt oben einen rechteckig abknickenden horizontalen oberen Rahmenrand 4 und unten einen ebensolchen unteren Rahmenrand 5. Der untere Rahmenrand 5 wird mit einer explosionsgefährdeten Anlage, vorzugsweise durch Schrauben verbunden und umgrenzt eine zum Überdruckausgleich vorgesehene Öffnung 11 in der explosionsgefährdeten Anlage. An einer rückwärtigen Seitenwand 12 ist am oberen Rahmenrand 4 ein Scharnier 13 angeordnet, dass mit dem Berstblech 2 verbunden ist. Das Berstblech 2 ist vorzugsweise rechteckig ausgebildet und liegt mit seinen umlaufenden Rändern vollständig auf dem oberen Rahmenrand 4 des Rahmens 1 auf, so dass die Öffnung 11 dadurch vollständig verschlossen wird. Das Berstblech 2 als Abdichtelement ist dabei ca. 0,5 bis 2 mm dick und besitzt dadurch nur eine geringe Masse, die sich im Explosionsfall ohne nennenswerte Trägheitskraft im Millisekundenbereich öffnen lässt. Zwischen dem oberen Rahmenrand 4 und dem unteren umlaufenden Rand des Berstblechs 2 ist vorzugsweise ein 10 bis 40 mm breiter Klettbandverschluss 6 angebracht, der eine statische Haftkraft von ca. 3 bis 100 N/cm² aufweist.

Dieser Klettbandverschluss 6 besteht aus einem Knopf- oder Hakenband 7 und einem Vliessband 8, die in der Mitte verhakend parallel aufeinanderliegen, wobei deren Rückseiten selbstklebende Teile besitzen, die jeweils am Berstblech 1 und an dem oberen Rahmenrand 4 aufgeklebt oder befestigt sind. Dabei lässt sich durch eine vorgebbare Breite des Klettbandverschlusses 6 als Sollreißstelle die jeweils erforderliche Haftkraft des Verschlusses nahezu beliebig festlegen. Soweit das Berstblech 2 die Öffnung 11 luftdicht verschließen soll, kann zwischen dem Berstblech 2 und dem oberen Rahmenrand 4 auch noch eine Dichtung, vorzugsweise aus Gummi oder einem hitzebeständigen Kunststoff vorgesehen werden.

Zum Verschluss der Öffnung 11 der explosionsgefährdeten Anlage kann der Rahmen 1 auch als runder Rohrstutzen ausgebildet sein. Bei einem klappenartig angeordneten Berstblech 2 kann zum selbsttätigen Verschließen auch eine Anschlagfeder oberhalb des Berstblechs 2 oder eine Rückholfeder zwischen dem Rahmen 1 und dem Berstblech 2 angeordnet sein.

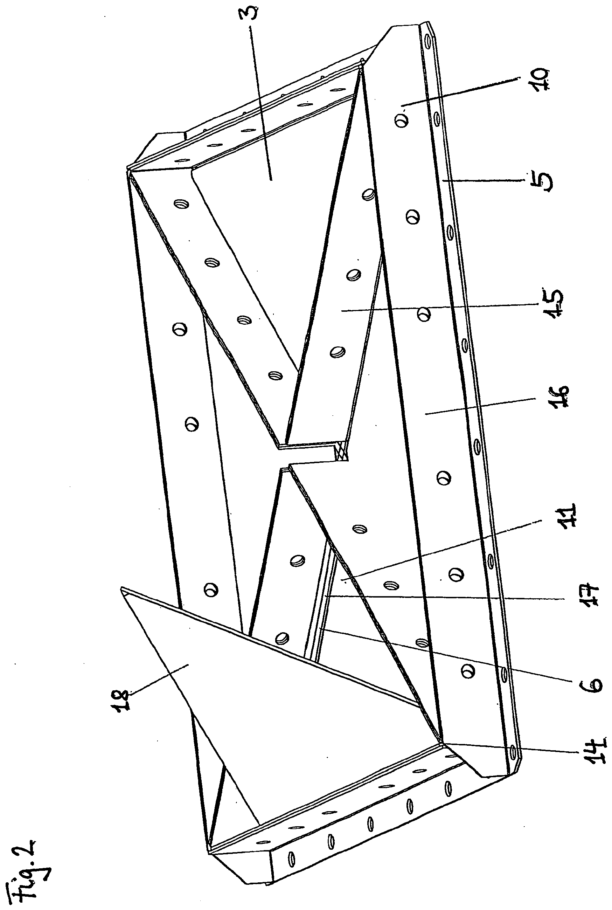

In Fig. 2 der Zeichnung ist ein Berstelement dargestellt, das aus einem rechteckigen Rahmen 1 und einer mehrteiligen Berstfolie 3 als Abdichtelement besteht. Dabei ist der Rahmen 1 aus T-förmigen Rahmenblechen 16 zusammengesetzt, die vertikale Seitenwände 10 bilden und einen nach innen und nach außen abknickenden unteren Rahmenrand 5 aufweisen. Dieser untere Rahmenrand 5 wird vorzugsweise außen mittels einer Schraubverbindung mit der explosionsgefährdeten Anlage verbunden und innen stellt er einen Auflagerand 17 dar. Zwischen den Ecken 14 des Rahmens 1 sind diagonal angeordneten Trennbleche 15 befestigt, die T-förmig wie die Rahmenbleche 16 ausgebildet sind und zur Öffnung 11 ebenfalls einen nach beiden Seiten abknickenden Auflagerand 17 aufweisen. Zwischen den Trennblechen 15 sind vorzugsweise vier dreieckförmige Berstfolienteile 18 angeordnet, die unten auf den Auflagerändern 17 als Sollreißstelle durch einen Klettverschluss befestigt sind und vier Teilabdichtelemente 18 bilden. Dabei sind die vier Berstfolienteile 18 vorzugsweise an den Auflagerändern 17 der Rahmenbleche 16 scharnierartig befestigt, so dass im Explosionsfall die mehrteiligen Berstfolienteile 18 von ihrer Spitze, die im Zentrum aneinanderstoßen, nach oben klappen. In Fig. 2 der Zeichnung ist funktional nur ein Berstfolienteil 18 in aufgeklapptem Zustand dargestellt, während die anderen drei Berstfolienteile 18 geschlossen dargestellt sind.

Als Berstfolie 3 wird vorzugsweise eine Zinkfolie von ca. 0,07 bis 0,8 mm Dicke verwendet, die Innendruckwerten von ca. 0,02 bis 0,2 bar standhält. Bei größeren Druckwerten können statt der Berstfolie 3 auch Berstbleche 2 vorgesehen werden. Derartige Berstbleche 2 oder -folien 3 können sowohl aus Metall oder einem hitzebeständigen Kunststoff bestehen. Zur gasdichten Abdichtung können auf den Auflagerändern 17 auch Dichtungselemente angeordnet werden. Ein derartiges Berstelement mit einer mehrteiligen Berstfolie 3 oder einem mehrteiligen Berstblech 2 kann auch rund oder mehreckig ausgebildet sein, wobei diese auch aus zwei, drei oder mehr als vier Teilen bestehen können.

Zur Erhöhung der Stabilität oder Steifigkeit des oder der Abdichtelemente 2, 3 können diese auch aus einer Sandwichskonstruktion bestehen, wodurch vorteilhafterweise das Gewicht nicht nennenswert erhöht werden muss. Dabei wird statt der Berstfolie 3 ein Abdichtelement 2, 3 aus mehreren leichten Schichten gewählt. So besteht die untere Schicht, die auf der Öffnung 11 aufliegt, vorzugsweise aus einem dünnen Stahlblech von ca. 0,3 bis 0,7 mm Dicke. Darauf wird dann eine Metallschaumschicht von ca. 3 bis 7 mm Dicke aufgebacken oder befestigt. Darauf wird dann noch eine Deckschicht vorzugsweise aus Leichtmetall wie zum Beispiel Aluminium aufgebracht, die eine Dicke von ca. 0,3 bis 0,7 mm aufweist. Ein derartiges Abdichtelement hat insbesondere den Vorteil, dass sich dieses auch bei einem verhältnismäßig hohen Betriebsdruck nicht verformt und dadurch seine anfängliche Dichtigkeit behält. Desweiteren öffnet ein derartiges Berstelement durch sein geringes Gewicht hinreichend schnell, so dass es im Explosionsfall zu einer raschen Druckentlastung kommt.

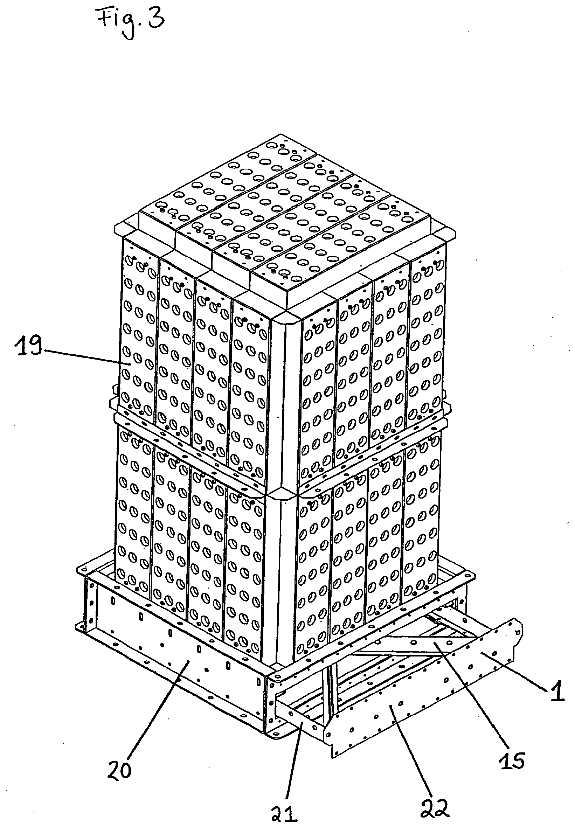

In Fig. 3 der Zeichnung ist ein Berstelement dargestellt, das schubladenförmig ausgebildet und deshalb in einem Feuerschutzkorb 19 einschiebbar angeordnet ist. Berstelemente, die im feuergefährdeten Bereich oder in von Personen begehbaren Räumen angeordnet sind, müssen von Feuerschutzkörben umgeben sein, damit mögliche Flammen nicht austreten können. Ein derartiger Feuerschutzkorb 19 als Druckentlastungsvorrichtung ist in der deutschen Patentanmeldung DE 10 2011 112 123.8 beschrieben, in dessen unterem Rahmenteil 20 das Berstelement einschiebbar angeordnet ist. Dabei ist das schubladenförmig ausgebildete Berstelement im Grunde wie das Berstelement nach Fig. 2 der Zeichnung ausgeführt. Allerdings sind die Rahmenbleche 21 nicht mit einem unteren nach außen gerichteten Rahmenrand versehen, da dieser nicht festschraubbar, sondern nur einschiebbbar sein soll. Desweiteren verfügt das schubladenförmige Berstelement als vorderes Rahmenblech über ein vergrößertes Vorderseitenblech 22, das am unteren Rahmenteil 20 anliegt und mit diesem durch eine Schraubverbindung verschlossen werden kann. Ansonsten verfügt das Berstelement auch über diagonal angeordnete Trennbleche 15 und nicht dargestellten Berstfolienteilen 18, die mittels eines Klettbandverschlusses 6 mit dem Rahmen 1 verbunden sind.

## Patentansprüche

1. Berstelement für eine explosionsgefährdete Anlage, bestehend aus einem eine Öffnung (11) umschließenden Rahmen (1) oder Sockel, der mit der explosionsgefährdeten Anlage verbunden ist und einem am Rahmen (1) befestigten, die Öffnung (11) verschließendes flaches Abdichtelement (2, 3) mit mindestens einer Sollreißstelle, an dessen umlaufenden Kanten oder Auflagerändern (4, 17) als Sollreißstelle ein Klettbandverschluss (6) befestigt ist, der bei einem vorgegebenen Überdruck die Öffnung (11) nach außen freigibt,
**dadurch gekennzeichnet,**
**dass** das Abdichtelement (2, 3) aus mehreren Teilabdichtelemente (18) besteht und
**dass** innerhalb des Rahmens(1) oder Sockels diagonal ein oder mehrere Trennbleche (15) vorgesehen sind, die Auflageränder (17) aufweisen, auf denen die Teilabdichtelemente (18) befestigt sind.

2. Berstelement nach dem Oberbegriff des Anspruchs 1, **dadurch gekennzeichnet, dass** der Rahmen (1) oder der Sockel schubladenförmig ausgebildet ist, wobei dieser so ausgebildet ist, dass er in einem Feuerschutzkorb zur Abdichtung der Öffnung (11) einschiebbar angeordnet ist.

3. Berstelement nach Anspruch 1, **dadurch gekennzeichnet, dass** der Rahmen (1) aus vier quadratisch oder rechteckig verbundenen Seitenwänden (10) besteht, der mindestens einen unteren Rahmenrand (5) aufweist, der mit der explosionsgefährdeten Anlage verbindbar ist.

4. Berstelement nach Anspruch 1, **dadurch gekennzeichnet, dass** der Sockel aus einem runden oder eckigen Rohrstutzen besteht, der mindestens unten einen unteren Sockelrand aufweist, der mit der explosionsgefährdeten Anlage verbindbar ist.

5. Berstelement nach Anspruch 1, 3 und 4, **dadurch gekennzeichnet, dass** der Sockel oder der Rahmen (1) einen oberen Rahmenrand (4) aufweist, auf den flächendeckend das Abdichtelement (2, 3) verbindend aufliegt.

6. Berstelement nach einem der Ansprüche 1 bis 5, **dadurch gekennzeichnet, dass** die Abdichtelemente (2, 3) als dichte Berstfolie (3) oder als Berstblech (2) ausgebildet sind.

7. Berstelement nach einem der Ansprüche 1 bis 6, **dadurch gekennzeichnet, dass** das Abdichtelement (2, 3) oder die Teilabdichtelemente (18) an einer ihrer Seitenkanten über ein Scharnier (13) mit dem Rahmen (1) oder dem Sockel verbunden sind.

8. Berstelement nach einem der Ansprüche 1 bis 7, **dadurch gekennzeichnet, dass** das Abdichtelement (2, 3) oder die Teilabdichtelemente (18) aus einem sandwichartig aufgebauten dünnen Berstblech (2) besteht, das noch mindestens eine Schicht aus einem Metallschaum und eine Deckschicht aus Leichtmetall enthält.

## Claims

1. Burst element for a potentially explosive system, composed of a frame (1) or a base surrounding an opening (11) which is connected to the potentially explosive system, and a flat sealing element (2, 3) connected to the frame (1) which closes the opening (11), and has at least one rated point of tearing, the sealing element having a Velcro fastener (6) as rated point of tearing, fastened to the circumferential edges or the supporting edges (4, 17), the fastener enabling the opening (11) to the outside at a predetermined overpressure,
**characterized in that**
the sealing element (2, 3) is composed of several element segments (18) and that one or more diagonal separating sheets (15) are provided within the frame (1) or the base, having contact edges (17) on which the sealing element segments (18) are fixed.

2. Burst element as per the generic term of claim 1, **characterized in that** the frame (1) or the base is designed in a drawer-like way and designed such that it is arranged retractably in a fire protection basket for sealing the opening (11).

3. Burst element as per claim 1, **characterized in that** the frame (1) is composed of four square or rectangle side walls (10) connected to each other, the frame having at least one inferior frame edge (5) that can be connected to the potentially explosive system.

4. Burst element as per claim 1, **characterized in that** the base is composed of a round or an angular pipe socket which at least on its bottom side has an inferior base edge which can be connected to the potentially explosive system.

5. Burst element as per claims 1, 3 and 4, **characterized in that** the base or the frame (1) has an upper frame edge (4) on which the sealing element (2, 3) is supported over the entire surface and is connected.

6. Burst element as per one of claims 1 to 5, **characterized in that** the sealing elements (2, 3) are designed as dense bursting foil (3) or as bursting sheet (2).

7. Burst element as per one of claims 1 to 6, **characterized in that** the sealing element (2, 3) or the sealing element segments (18) are connected on one of their side edges to the frame (1) or the base by means of a hinge (13).

8. Burst element as per one of claims 1 to 7, **characterized in that** the sealing element (2, 3) or the sealing element segments (18) are composed of a thin, sandwich-like burst sheet (2) which includes at least one layer of metal foam and a surface layer of light metal.

## Revendications

1. Élément de rupture pour installation explosive, composé d'une ouverture (11) entourée d'un cadre (1) ou socle relié à l'installation explosive et d'un élément d'étanchéité plat (2, 3) fixé au cadre (1) et refermant l'ouverture (11), avec au moins un point de rupture théorique, dont les arêtes périphériques ou bordures d'appui (4, 17) présentent une bande velcro (6) en guise de point de rupture théorique, qui libère l'ouverture (11) vers l'extérieur en présence d'une pression excessive définie, **caractérisé en ce que** l'élément d'étanchéité (2, 3) se compose de plusieurs éléments d'étanchéité partiels (18) et **en ce que** une ou plusieurs tôles de séparation (15) sont prévues diagonalement dans le cadre (1) ou le socle, tôles présentant des bordures d'appui (17) sur lesquelles sont fixés les éléments d'étanchéité partiels (18).

2. Élément de rupture selon le terme générique de la revendication 1, **caractérisé en ce que** le cadre (1) ou le socle est en forme de tiroir et coulisse dans une cage coupe-feu pour calfeutrer l'ouverture (11).

3. Élément de rupture selon la revendication 1, **caractérisé en ce que** le cadre (1) se compose de quatre parois latérales (10) assemblées en forme carrée ou rectangulaire, et présente au moins un bord inférieur (5) pouvant être raccordé à l'installation explosive.

4. Élément de rupture selon la revendication 1, **caractérisé en ce que** le socle se compose d'une tubulure ronde ou angulaire, qui présente au moins sur sa partie inférieure un bord inférieur pouvant être raccordé à l'installation explosive.

5. Élément de rupture selon les revendications 1, 3 et 4, **caractérisé en ce que** le socle ou le cadre (1) présente un bord supérieur (4) sur lequel s'appuie l'élément d'étanchéité (2, 3) sur toute la surface.

6. Élément de rupture selon l'une des revendications 1 à 5, **caractérisé en ce que** les éléments d'étanchéité (2, 3) sont constitués d'une feuille de rupture étanche (3) ou d'une tôle de rupture (2).

7. Élément de rupture selon l'une des revendications 1 à 6, **caractérisé en ce que** l'élément d'étanchéité (2, 3) ou les éléments d'étanchéité partiels (18) sont reliés au cadre (1) ou au socle sur l'un de leurs bords latéraux au moyen d'une charnière (13).

8. Élément de rupture selon l'une des revendications 1 à 7, **caractérisé en ce que** l'élément d'étanchéité (2, 3) ou les éléments d'étanchéité partiels (18) se compose d'une fine tôle de rupture (2) disposée en sandwich, contenant au moins une couche de mousse métallique et une couche supérieure en métal léger.
